(19) Europäisches Patentamt
European Patent Office
Office européen des brevets

(11) EP 4 219 578 A1

(12) **EUROPÄISCHE PATENTANMELDUNG**

(43) Veröffentlichungstag:
**02.08.2023 Patentblatt 2023/31**

(21) Anmeldenummer: **22153910.9**

(22) Anmeldetag: **28.01.2022**

(51) Internationale Patentklassifikation (IPC):
***C08G 18/28*** (2006.01) ***C08G 18/32*** (2006.01)
***C08G 18/44*** (2006.01) ***C08G 18/66*** (2006.01)
***C08G 18/79*** (2006.01)

(52) Gemeinsame Patentklassifikation (CPC):
**C08G 18/6655; C08G 18/282; C08G 18/283;**
**C08G 18/3275; C08G 18/44; C08G 18/792;**
C08G 2110/0083

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude K12**
**51365 Leverkusen (DE)**

(54) **HERSTELLUNG VON ALIPHATISCHEN POLYURETHAN-WEICHSCHAUMSTOFFE IN EINEM PRÄPOLYMERVERFAHREN BASIEREND AUF ALIPHATISCHEN OLIGOMEREN POLYISOCYANATEN UND MONOHYDROXYFUNKTIONELLEN VERBINDUNGEN**

(57) Die vorliegende Erfindung betrifft ein Verfahren zur Herstellung von Polyurethan-Weichschaumstoffen, die insbesondere eine niedrige Stauchhärte und/oder einen niedrigen Druckverformungsrest-Wert (DVR) besitzen, unter Verwendung von aliphatischen oligomeren Polyisocyanaten und monohydroxyfunktionellen Verbindungen sowie die Verwendung von aliphatischen oligomeren Polyisocyanaten in Kombination mit monohydroxyfunktionellen Verbindungen zur Erniedrigung der Stauchhärte und/oder des Druckverformungsrest-Werts (DVR) von Polyurethan-Weichschaumstoffen. Die Erfindung betrifft des Weiteren einen, bevorzugt flexiblen, Polyurethan-Weichschaumstoff der nach dem vorgenannten Verfahren hergestellt wird oder herstellbar ist und eine niedrige Stauchhärte und/oder einen niedrigen Druckverformungsrest-Wert (DVR) besitzt, sowie dessen Verwendung, zum Beispiel für die Herstellung von körperstützenden Elementen wie Polstern, Matratzen, Möbeln, Automobilsitzen und Motorradsitzen.

EP 4 219 578 A1

## Beschreibung

Die vorliegende Erfindung betrifft ein Verfahren zur Herstellung von Polyurethan-Weichschaumstoffen, die insbesondere eine niedrige Stauchhärte und/oder einen niedrigen Druckverformungsrest-Wert (DVR) besitzen, unter Verwendung von aliphatischen oligomeren Polyisocyanaten und monohydroxyfunktionellen Verbindungen sowie die Verwendung von aliphatischen oligomeren Polyisocyanaten in Kombination mit monohydroxyfunktionellen Verbindungen zur Erniedrigung der Stauchhärte und/oder des Druckverformungsrest-Werts (DVR) von Polyurethan-Weichschaumstoffen. Die Erfindung betrifft des Weiteren einen, bevorzugt flexiblen, Polyurethan-Weichschaumstoff der nach dem vorgenannten Verfahren hergestellt wird oder herstellbar ist und eine niedrige Stauchhärte und/oder einen niedrigen Druckverformungsrest-Wert (DVR) besitzt, sowie dessen Verwendung, zum Beispiel für die Herstellung von körperstützenden Elementen wie Polstern, Matratzen, Möbeln, Automobilsitzen und Motorradsitzen.

## Stand der Technik

Weichschäume machen das größte Volumen für die Anwendung von Polyurethanen aus und sind die größte Kategorie von polymeren zellulären Materialien. Sie werden hauptsächlich für Polsterung in der Möbelindustrie, für Matratzen, in der Automobilindustrie sowie in der Textilindustrie verwendet. Gegenwärtig kommerziell erhältliche Weichschäume werden üblicherweise aus Erdöl basierten Polyolen und aromatischen Isocyanaten, meistens aus einer Mischung von Toluol-2,4-diisocyanat (2,4-TDI) und Toluol-2,6-diisocyanat (2,6-TDI) oder Diphenylmethandiisocyanat-Mischungen (MDI) hergestellt.

Konventionelle Polyurethanschäume auf Basis dieser aromatischen Isocyanate sind nicht farbstabil und verfärben nach einiger Zeit, während Polyurethanschäume auf Basis von aliphatischen Isocyananten farb- und lichtstabil sind. Zur Herstellung letztgenannter Schäume werden üblicherweise cycloaliphatische Isocyanate wie Isophorondiisocyanat (IPDI) oder Bis(4-isocyanato cyclohexyl)methan (H12MDI) eingesetzt (DE 2447067 A1). Linearaliphatische Diisocyanate werden normalerweise nicht bzw. nicht als alleinige Isocyanatkomponente verwendet, da die mechanischen Eigenschaften solcher Schäume relativ gering sind. So beschreibt US 2006/0160977 A1 die Verwendung einer Mischung aus Hexamethylendiisocyanat (HDI) mit entweder IPDI oder H12MDI zur Herstellung von Schäumen.

Ein Nachteil vieler existierender Polyurethanschaum-Formulierungen - so auch der in den oben angeführten Schriften beschriebenen Formulierungen - ist, dass diese fast ausschließlich auf monomeren Diisocyanaten als Bausteinen aufbauen. Beim Einsatz von monomeren Diisocyanaten zur Herstellung von Polyurethanschäumen werden hohe Anforderungen an Prozesssicherheit und Luftkontrolle bezüglich flüchtiger Bestandteile gestellt. Die Verwendung von Monomer-armen, oligomeren Polyisocyanaten an Stelle der leicht flüchtigen monomeren Isocyanaten stellt einen großen Vorteil hinsichtlich des Arbeitsschutzes dar.

Lichtbeständige Schäume auf Basis von aliphatischen Isocyanaten / Polyisocyanaten mit einer oligomeren Struktur sind beispielsweise in EP0006150 B1, EP 3296336 A1 und WO 02/074826 A1 beschrieben. So offenbart die EP0006150 B1 die Verwendung von HDIbasierten Biureten oder von urethanmodifizierten Polyisocyanaten aus aliphatischen bzw. cycloaliphatischen Diisocyanaten und niedermolekularen Alkandiolen. Aus EP 3296336 A1 ist die Verwendung von auf Pentamethylenediisocyanat-basierten (PDI) Uretdionen zur Herstellung von Polyurethanen bekannt, wobei ebenfalls Isocyanurate und Allophante auf Basis von PDI oder HDI enthalten sein können. Schließlich offenbart die WO 02/074826 A1 die Verwendung von Isocyanuraten oder Biureten auf Basis alipahtischer Isocyanate, wie HDI. Durch Umsetzung mit langkettigen Polyetherpolyolen bzw. Polyesterpolyolen und Vernetzer sowie Treibmitteln und Schaumstabilisatoren können aus diesen Polyisocyanaten Polyurethan-Schäume erhalten werden.

Die Aufgabe der vorliegenden Erfindung bestand darin, Polyurethan-Weichschaumstoffe auf Basis von aliphatischen oligomeren Polyisocyanaten bereitzustellen, die sich für den Einsatz in typischen Weichschaumanwendungen wie Polstern, Matratzen, Möbeln, Automobilsitzen und Motorradsitzen eignen. Im Besonderen sollten die Schaumstoffe gegenüber den Schaumstoffen des Standes der Technik verbesserte mechanische Eigenschaften aufweisen, vor allem hinsichtlich der Stauchhärte und des Druckverformungsrest-Werts (DVR). Dies gilt insbesondere für hochwertige flexible Polyurethan-Weichschaumstoffe auf Basis von aliphatischen oligomeren Polyisocyanaten. Ferner sollten bei der Herstellung dieser Weichschaumstoff auch Edukte auf $CO_2$-Basis und/oder auf Basis nachwachsender Rohstoffe eingesetzt werden können, um die Umwelt- sowie $CO_2$-Bilanz dieser PolyurethanWeichschaumstoffe zu verbessern.

Diese Aufgaben wurden gelöst durch ein Verfahren zur Herstellung von Polyurethan-Weichschaumstoffen durch Umsetzung einer Zusammensetzung mit den Komponenten

A) mindestens eine monohydroxyfunktionelle Verbindung und mindestens ein Polyol und

B) mindestens ein aliphatisches oligomeres Polyisocyanat
bei einer Isocyanat-Kennzahl von wenigstens 80, insbesondere von 85 bis 115, bevorzugt von 90 bis 110 wobei die Zusammensetzung weiterhin die Komponenten C) bis F) enthält

C) mindestens ein chemisches und/oder physikalisches Treibmittel;

D) mindestens einen Katalysator;

E) gegebenenfalls eine oberflächenaktive Verbindung und

F) gegebenenfalls von Komponente E) verschiedene Hilfs- und Zusatzstoffe.

Des Weiteren betrifft die Erfindung einen Polyurethan-Weichschaumstoff, erhalten oder erhältlich durch das erfindungsgemäße Verfahren.

Außerdem betrifft die Erfindung die Verwendung des erfindungsgemäßen Polyurethan-Weichschaumstoffs als oder zur Herstellung von körperstützenden Elementen, insbesondere Polstern, Matratzen, Möbeln, Automobilsitzen und Motorradsitzen.

Die Erfindung betrifft zudem die Verwendung einer monohydroxyfunktionellen Verbindung in Kombination mit einem aliphatischen oligomeren Polyisocyanat bei einer Isocyanat-Kennzahl von wenigstens 80, insbesondere von 85 bis 115, bevorzugt von 90 bis 110 zur Erniedrigung der Stauchhärte und/oder des Druckverformungsrest-Werts von Polyurethan-Weichschaumstoffen.

Überraschenderweise wurde gefunden, dass aliphatische oligomere Polyisocyanate, insbesondere solche vom Typ der Isocyanurate oder Iminooxadiazindione, in Kombination mit monohydroxyfunktionellen Verbindungen zu Polyurethan-Weichschaumstoffen führen, welche die genannten Anforderungen erfüllen und die insbesondere eine verbesserte Stauchhärte (im 4. Zyklus, gemessen nach DIN EN ISO 3386-1), bevorzugt von ≤ 14,0 kPa, besonders bevorzugt von ≤ 8 kPa sowie einen verbesserten DVR-Wert (gemessen nach DIN EN ISO 1856 -2008), bevorzugt von ≤ 3,5 % aufweisen.

Unter einem Polyurethan-Weichschaumstoff wird typischerweise ein Schaumstoff verstanden, der im Bereich Polstern, Matratzen, Verpackung, Automobilanwendungen, Schuhwerk verwendet wird. Polyurethan-Weichschaumstoffe sind chemisch gesehen Polyadditionsprodukte aus Polyolen und üblicherweise Diisocyanaten, die in einer exothermen Reaktion, durch das meist chemisch hergestellte Treibmittel $CO_2$, welches aus der NCO-Wasserreaktion entsteht, hergestellt werden. Die Gel- (NCO-OH-Reaktion) und Treibreaktion (NCO-Wasserreaktion) können unter Mitverwendung von Katalysatoren, Stabilisatoren und sonstigen Hilfsstoffen modifiziert werden, so dass eine breite Palette unterschiedlicher Schaumstoffe entstehen. Die verwendeten Polyole sind vorzugsweise zu einem großen Anteil langkettige Polyole mit einer Funktionalität von 2 bis 3.

**Komponente A):**

Die erfindungsgemäße Zusammensetzung enthält mindestens eine monohydroxyfunktionelle Verbindung und mindestens ein Polyol.

Komponente A1):

Als Komponente A1) werden primäre, sekundäre und/oder tertiäre monohydroxyfunktionellen Verbindungen mit 1 bis 12 Kohlenstoffatomen, bevorzugt primäre monohydroxyfunktionelle Verbindungen, eingesetzt. Die Kohlenstoffketten können gesättigt oder ungesättigt, linear oder verzweigt, aliphatisch oder cycloaliphatisch oder aromatisch sein sowie Heteroatome wie Sauerstoff enthalten.

Dabei handelt es sich vorzugsweise um niedermolekulare monohydroxyfunktionelle Verbindungen (Alkohole) mit einem Molekulargewicht von 32,04 g/mol bis 186,34 g/mol, die neben der Hydroxy-Funktionalität (OH-Gruppe) bevorzugt keine weiteren Funktionalitäten (z.B. Ether- oder Ester-Funktionalitäten etc.) aufweisen. Insbesondere sind acyclische und/oder cyclische monohydroxyfunktionellen Alkanole und/oder acyclische und/oder cyclische monohydroxyfunktionellen Alkenole bevorzugt. Beispielhaft seien genannt Methanol, Ethanol, iso-Propanol, n-Propanol, iso-Butanol, n-Butanol, sec-Butanol, tert-Butanol, Pentan-1-ol, Pentan-2-ol, Pentan-3-ol, 2-Methyl-butan-1-ol, 2-Methyl-butan-2-ol, 3-Methyl-butan-1-ol, 3-Methyl-butan-2-ol, 2,2-Dimethyl-propan-1-ol, Hexan-1-ol, Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2-Ethyl-1-butanol, 2-Methyl-3-butin-2-ol, 3-Butin-1-ol, Propagylalkohol, 1-tert-Butoxy-2-propanol, 1-Heptanol, 2-Heptanol, 3-Heptanol, 4-Heptanol, 1-Octanol, 2-Octanol, 3-Octanol, 4-Octanol, 1-Nonanol, 2-Nonanol, 3-Nonanol, 4-Nonanol, 5-Nonanol, 1-Decanol, 2-Decanol, 3-Decanol, 4-Decanol, 5-Decanol, 1-Undecanol, 2-Undecanol, 3-Undecanol, 4-Undecanol, 5-Undecanol, 6-Undecanol, 1-Dodecanol, 2-Dodecanol, 3-Dodecanol, 4-Dodecanol, 5-Dodecanol, 6-Dodecanol oder Mischungen von diesen. Weiterhin bevorzugt sind monohydroxyfunktionellen Verbindungen mit einem Schmelzpunkt von ≤ 60 °C, ganz besonders bevorzugt von ≤ 40 °C und am meisten bevorzugt ≤ 20°C. Insbesondere sind niedermolekulare

primäre monohydroxyfunktionelle Verbindungen bevorzugt, da diese aufgrund der deutlich höheren Reaktivität schneller mit den Isocyanat-Gruppen reagieren.

Komponente A2):

Als Komponente A2) werden polymere monohydroxyfunktionelle Verbindungen, bevorzugt Polyethermonoole, Polycarbonatmonoole, Polyestercarbonatmonoole, Polyethercarbonatmonoole, Polyetherestercarbonatmonoole und/oder Mischungen davon, eingesetzt, wobei die polymere monohydroxyfunktionelle Verbindung besonders bevorzugt eine primäre Hydroxylgruppe aufweist. Die polymere monohydroxyfunktionelle Verbindung A2) weist bevorzugt eine Hydroxylzahl von 20 bis 250 mg KOH/g auf, vorzugsweise 20 bis 112 mg KOH/g und besonders bevorzugt 20 bis 50 mg KOH/g, gemessen nach DIN 53240-3:2016-03.

Die Herstellung dieser Verbindungen kann durch katalytische Addition von einem oder mehreren Alkylenoxiden an H-funktionelle Starterverbindungen, erfolgen. Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe, umfassend oder bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierten Fette als Mono-, Di- und Triglyceride, epoxidierte Fettsäuren, C1-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxy¬propyl¬trimethoxysilan, 3-Glycidyioxy¬propyl¬triethoxysilan, 3-Glycidyloxypropyltripropoxysilan, 3-Glycidyloxy¬propyl-methyl-dimethoxysilan, 3-Glycidyl¬oxy¬propylethyldiethoxysilan, 3-Glycidyloxy-propyltrlisopropoxysilan. Vorzugsweise werden als Alkylenoxide Ethylenoxid und/oder Propylenoxid und/oder 1,2 Butylenoxid eingesetzt. Die Alkylenoxide können dem Reaktionsgemisch einzeln, im Gemisch oder nacheinander zugeführt werden. Es kann sich um statistische oder um BlockCopolymere handeln. Werden die Alkylenoxide nacheinander dosiert, so enthalten die hergestellten Produkte (Polyetherpolyole) Polyetherketten mit Blockstrukturen.

In einer bevorzugten Ausführungsform der Erfindung liegt der Anteil an Ethylenoxid an der insgesamt eingesetzten Menge an Propylenoxid und Ethylenoxid $\geq 0$ und $\leq 90$ Gew.-%, bevorzugt $\geq 0$ und $\leq 60$ Gew.-% Besonders bevorzugt sind Polyetherpolyole mit endständigen primären Hydroxylgruppen, da diese eine größere Reaktivität gegenüber Isocyanaten haben.

Die H-funktionellen Starterverbindungen sind für die Herstellung von Polyethermonoolen monofunktionell. Unter "H-funktionell" wird im Sinne der Erfindung eine Starterverbindung verstanden, die gegenüber Alkoxylierung aktive H-Atome aufweist. Als solche können Alkohole, Amine, Thiole und Carbonsäuren eingesetzt werden. Beispiele für bevorzugte monofunktionelle Alkohole sind Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin oder 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure. Besonders gut als Starterverbindungen geeignet sind Verbindungen aus der Gruppe der Glycolether, wie z.B. Diethylenglycolmonoethylether. Bevorzugt handelt es sich bei den monofunktionellen Starterverbindungen um Diethylenglycolmonobutylether (Butyldiglycol).

Ferner ist es bevorzugt, dass der Stoffmengenanteil der OH-Gruppen der Summe der Komponenten A1) und A2) 25,0 bis 90,0 mol-%, weiter bevorzugt 35,0 bis 85,0 mol-%, besonders bevorzugt 40,0 bis 80,0 mol-% beträgt, bezogen auf die Gesamtstoffmenge der OH-Gruppen der Komponente A).

Vorzugsweise ist das Äquivalentverhältnis der OH-Gruppen der Summe der Komponenten A1) und A2) zu den NCO-Gruppen der Komponenten B) 0,15 bis 0,65, weiter bevorzugt 0,20 bis 0,55 und besonders bevorzugt 0,25 bis 0,50 beträgt.

Komponente A3):

Die als Komponente A3) einsetzbaren Polyethercarbonatpolyole weisen eine Hydroxylzahl (OH-Zahl) gemäß

DIN 53240-3:2016-03 von ≥ 20 mg KOH/g bis ≤ 600 mg KOH/g, vorzugsweise von ≥ 50 mg KOH/g bis ≤ 500 mg KOH/g, besonders bevorzugt von ≥ 50 mg KOH/g bis ≤ 300 mg KOH/g auf.

Zur Herstellung der Polyethercarbonatpolyole können die gleichen Alkylenoxide (Epoxide) und die gleichen H-funktionellen Startsubstanzen eingesetzt werden wie weiter unten auch zur Herstellung der Polyetherpolyole beschrieben wird (siehe Komponente A4).

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Beispielsweise umfasst die Herstellung von Polyethercarbonatpolyolen folgende Schritte, indem:

(a) eine H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (a) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) ein oder mehrere der Alkylenoxide und Kohlendioxid zu der aus Schritt (β) resultierenden Mischung zugesetzt werden, wobei die in Schritt (γ) eingesetzten Alkylenoxide gleich oder verschieden sein können von den bei Schritt (β) eingesetzten Alkylenoxiden, und wobei sich nach Schritt (γ) kein weiterer Alkoxylierungsschritt anschließt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht Mn größer als 500 g/mol enthalten.

Der DMC-Katalysator wird zumeist in einer Menge von ≤ 1 Gew. -%, vorzugsweise in einer Menge von ≤ 0,5 Gew. -%, besonders bevorzugt in einer Menge von ≤ 500 ppm und insbesondere in einer Menge von ≤ 300 ppm, jeweils bezogen auf das Gewicht des Polyethercarbonatpolyols eingesetzt.

In einer bevorzugten Ausführungsform der Erfindung weist das Polyethercarbonatpolyol der Komponente A3) einen Gehalt an Carbonatgruppen ("aus Kohlendioxid stammenden Einheiten"), berechnet als $CO_2$, von ≥ 2,0 und ≤ 30,0 Gew.-%, bevorzugt von ≥ 5,0 und ≤ 28,0 Gew.-% und besonders bevorzugt von ≥ 10,0 und ≤ 25,0 Gew -% auf.

Vorzugsweise weisen die erfindungsgemäß einzusetzenden Polyethercarbonatpolyole zwischen den Carbonatgruppen auch Ethergruppen auf, was in Formel (I) schematisch dargestellt wird. In dem Schema gemäß Formel (I) steht R' für einen organischen Rest wie z.B. einem Alkyl, Alkylaryl oder Aryl-Rest, der jeweils auch Heteroatome wie beispielsweise O, S, Si usw. enthalten kann. Die Indices e und f stehen für eine ganzzahlige Zahl. Das im Schema gemäß Formel (I) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (I) gezeigte Polyethercarbonatpolyol beschränkt ist. In Bezug auf Formel (I) bedeutet dies, dass das Verhältnis von e/f bevorzugt von 2 : 1 bis 1 : 20, besonders bevorzugt von 1,5 : 1 bis 1 : 10 beträgt.

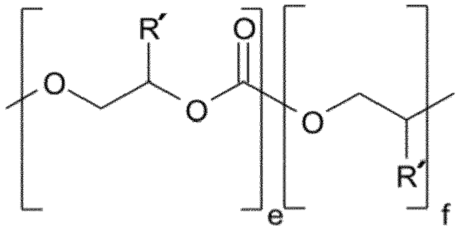

Formel (I)

Der Anteil an eingebautem $CO_2$ ("aus Kohlendioxid stammende Einheiten") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit dl: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:
Cyclisches Carbonat (welches als Nebenprodukt gebildet wurde) mit einer Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (II) berechnet,

$$LC' = \frac{\left[F(5,1-4,8) - F(4,5)\right] * 102}{N} * 100\% \qquad \text{Formel (II)}$$

wobei sich der Wert für N ("Nenner" N) nach Formel (III) berechnet:

$$N = \left[F(5,1-4,8) - F(4,5)\right] * 102 + F(4,5) * 102 + F(2,4) * 58 + 0,33 * F(1,2-1,0) * 58 + 0,25 * F(1,6-1,52) * 146$$

Formel (III)

Dabei gelten folgende Abkürzungen:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes Propylenoxid
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8-Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (IV) berechnet,

$$CC' = \frac{F(4,5)*102}{N}*100\% \qquad \text{Formel (IV)}$$

wobei sich der Wert für N nach Formel (III) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Zur Bestimmung des Anteils an eingebautem $CO_2$ in einem Polyethercarbonatpolyol kann wie zuvor hinsichtlich des Polyethercarbonatpolyol beschrieben vorgegangen werden, wobei das Startermolekül und damit einhergehend die obigen Gleichungen entsprechend anzupassen sind.

Polyethercarbonatpolyole sind beispielsweise unter dem Handelsnamen Cardyon® von der Covestro Deutschland AG kommerziell erhältlich.

Vorzugsweise umfasst das Polyol der Komponente A) wenigstens ein Polyethercarbonatpolyol A3).

<u>Komponente A4):</u>

Polyether-, Polyester- und/oder Polycarbonatpolyole können als Komponente A4) eingesetzt werden. Bevorzugt weist die Komponente A4) eine mittlere Funktionalität von > 1, besonders bevorzugt von ≥ 2 auf.

Als Polyetherpolyole geeignet sind solche mit einer Hydroxylzahl gemäß DIN 53240-3:2016-03 von ≥ 20 mg KOH/g bis ≤ 550 mg KOH/g, vorzugsweise von ≥ 20 bis ≤ 250 mg KOH/g und besonders bevorzugt ≥ 20 mg KOH/g bis ≤ 80 mg KOH/g. Die Herstellung dieser Verbindungen kann analog der Herstellung der oben unter Komponente A2 beschriebenen Polyethermonoole erfolgen. Als Alkylenoxide können die dort beschriebenen Alkylenoxide verwendet werden; es gelten die gleichen Vorzugsbereiche. Zur Herstellung der Polyetherpolyole werden jedoch H-funktionelle Startermoleküle mit einer durchschnittlichen Funktionalität von > 1 bis ≤ 6, bevorzugt von ≥ 1,5 und ≤ 6, besonders bevorzugt ≥ 2 und ≤ 4, ganz besonders bevorzugt ≥ 2 und ≤ 3, verwendet.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe, umfassend oder bestehend aus Wasser, mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® kommerziell erhältlich von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Startersubstanzen können auch aus der Substanzklasse der Polyetherpolyole ausgewählt sein, insbesondere solchen mit einem zahlenmittleren Molekulargewicht Mn im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxidund/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem zahlenmittleren Molekulargewicht Mn im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht Mn von 150 bis 2000 g/mol bevorzugt.

Des Weiteren können als H-funktionelle Startersubstanzen Polycarbonatpolyole (wie beispielsweise Polycarbonatdiole) eingesetzt werden, insbesondere solche mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Startersubstanzen eingesetzt werden. Insbesondere werden Polyethercarbonatpolyole, die nach dem oben beschriebenen Verfahren hergestellt werden, eingesetzt. Diese als H-funktionelle Startersubstanzen eingesetzten Polyethercarbonatpolyole werden hierzu in einem separaten Reaktionsschritt zuvor hergestellt.

Bevorzugte H-funktionelle Startersubstanzen sind Alkohole der allgemeinen Formel (V),

HO-(CH2)x-OH Formel (V),

wobei x eine Zahl von 1 bis 20, bevorzugt eine gerade Zahl von 2 bis 20 ist. Beispiele für Alkohole gemäß Formel (V) sind Ethylenglycol, 1,4-Butandiol, 1,6-Hexandiol, 1,8-Octandiol, 1,10-Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (V) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder

tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht Mn im Bereich von 62 bis 4500 g/mol und insbesondere ein zahlenmittleres Molekulargewicht Mn im Bereich von 62 bis 3000 g/mol, ganz besonders bevorzugt ein Molekulargewicht von 62 bis 1500 g/mol. Bevorzugt haben die Polyetherpolyole eine Funktionalität von ≥ 2 bis ≤ 3.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Diund Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

In einer bevorzugten Ausführungsform der Erfindung liegt der Anteil an Ethylenoxid an der insgesamt eingesetzten Menge an Propylenoxid und Ethylenoxid ≥ 0 und ≤ 90 Gew.-%, bevorzugt ≥ 0 und ≤ 60 Gew.-%. Vorzugsweise ist das Polyetherpolyol "EO-capped", d.h. das Polyetherpolyol besitzt terminale Ethylenoxidgruppen. Die dann endständigen primären Hydroxylgruppen haben eine größere Reaktivität gegenüber Isocyanaten. (G. Oertel, Polyurethane Handbook, 2nd Edition, page 194 and 219, (1993)).

Bei den ebenfalls als Komponente A4) einsetzbaren Polyesterpolyolen handelt es sich insbesondere um solche mit einem zahlenmittleren Molekulargewicht Mn im Bereich von 200 bis 4500 g/mol, vorzugsweise 400 bis 3500 g/mol, besonders bevorzugt von 800 bis 2500 g/mol. Als Polyesterpolyole werden bevorzugt mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Es ist auch möglich als Alkoholkomponente zweiwertige oder mehrwertige Polyetherpolyole einzusetzen. Falls Polyetherpolyole zur Herstellung der Polyesteretherpolyole eingesetzt werden, sind Polyetherpolyole mit einem zahlenmittleren Molekulargewicht Mn von 150 bis 2000 g/mol bevorzugt.

Als weitere Verbindungsklasse können Polycarbonatpolyole (wie beispielsweise Polycarbonatdiole) als Komponenet A4) eingesetzt werden, insbesondere solche mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Die beschriebenen Verbindungen der Komponenten A3) und A4) können sowohl einzeln als auch in Mischungen als Polyol der Komponente A) eingesetzt werden.

Komponente A5):

Als Komponente A5) werden Kettenverlängerer (chain extender) und/oder Vernetzer bzw. Vernetzungsmittel (cross linker) eingesetzt. Die Kettenverlängerer und Vernetzer sind vorzugsweise NCO-reaktive Verbindungen mit einer OH- und/oder NH-Funktionalität von mindestens 2 und einem Molekulargewicht von 62 bis 800 g/mol. Dies können beispielsweise Ethylenglykol, Diethylenglykol, 1,2-Propandiol, 1,3-Propandiol, 1,4-Butandiol, 1,6-Hexandiol, Glycerin, 1,1,1-Trimethylolpropan, Pentaerythrit, Monoethanolamin, Diethanolamin und ähnliche niedermolekularen Verbindungen sowie Mischungen von diesen sein.

**Komponente B):**

Die Komponente B) enthält mindestens ein aliphatisches oligomeres Polyisocyanat. Unter aliphatischen oligomeren Polyisocyanaten sollen im Rahmen der vorliegenden Erfindung Isocyanat-tragende Oligomere verstanden werden, die bevorzugt aus (2n+1) aliphatischen Polyisocyanaten gebildet sind, wobei n eine natürliche Zahl von 1 bis 10 ist. Dementsprechend werden sowohl symmetrische als auch asymmetrische Trimere, einschließlich deren höheren Homologe (wie Pentamere, Heptamere etc.) durch den Begriff "aliphatische oligomere Polyisocyanate" umfasst. Vorzugsweise besteht das aliphatische oligomere Polyisocyanat der Komponente B) zu wenigstens 90,0 Gew.-% aus diesen Isocyanat-tragenden Oligomeren. Die aliphatischen oligomeren Polyisocyanate enthalten dabei bevorzugt Isocyanurat- und/oder Iminooxadiazindion-Gruppen.

Bevorzugt werden als aliphatische oligomere Polyisocyanate der Komponente B) Isocyanat-tragende Trimere eingesetzt, wobei die Komponente B) insbesondere eine Mischung aus diesem Trimer und wenigstens einem weiteren Isocyanat-tragenden Oligomer enthält, bei dem n eine natürliche Zahl von 2 bis 10 ist. Vorzugsweise besteht das aliphatische oligomere Polyisocyanat der Komponente B) zu wenigsten 30,0 Gew.-%, bevorzugt 30,0 bis 80,0 Gew.% aus diesen Isocyanat-tragenden Trimeren. Besonders bevorzugt werden Isocyanat-tragende Trimere der Formel (VI) und/oder Formel (VII), jeweils gebildet aus 3 aliphatischen Polyisocyanaten, eingesetzt, wobei R unabhängig voneinander eine aliphatische C1 bis C15 Kohlenstoffkette ist.

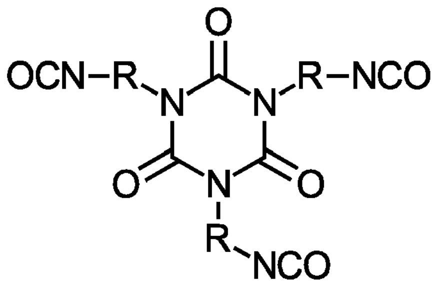

Formel (VI)

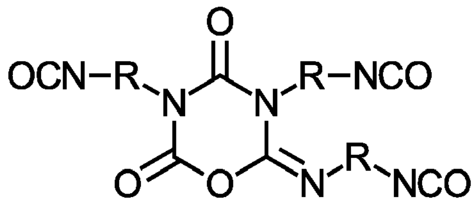

Formel (VII)

Die aliphatischen oligomeren Polyisocyanate sind allerdings nicht auf die vorgenannten Formen aus (2n+1) aliphatischen Polyisocyanaten beschränkt. So können beispielsweise auch Dimere sowie deren höheren Homologe unter die Definition der aliphatischen oligomeren Polyisocyanate fallen. Dementsprechend können die aliphatischen oligomeren Polyisocyanate auch Uretdion-, Carbodiimid-, Uretonimin-, Urethan-. Allophanat-, Biuret- sowie Harnstoff-Gruppen enthalten. Auch Mischformen, bei denen mehrere der oben genannten Strukturtypen in einem Oligomer auftreten, fallen unter die Definition.

Zur Herstellung der aliphatischen oligomeren Polyisocyanate können alle dem Fachmann bekannten niedermolekularen monomeren Diisocyanate eingesetzt werden. So sind monomere cyclo- oder linearaliphatische Di- und/oder Polyisocyanate als Ausgangsisocyanate geeignet, die einzeln oder in beliebigen Abmischungen eingesetzt werden können. Typische Beispiele sind 1,4-Diisocyanatobutan, 1,5-Diisocyanatopentan (PDI), 1,6-Diisocyanatohexan (HDI), 2-Methyl-1,5 diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan, 1-Isocyanato-1-methyl-4(3)-isocyanatomethylcyclohexan (IMCI), Bis-(isocyanatomethyl)-norbornan, Triisocyanate und/oder höherfunktionelle Isocyanate wie z. B. 4-Isocyanatomethyl-1,8-octandiisocyanat (Nonantriisocyanat), 1,6,11-Undecantriisocyanat, 1,3,5-Tris(6-isocyanatopentyl)-1,3,5-triazinan-2,4,6-trion oder beliebige Gemische solcher Isocyanatverbindungen. Insbesondere werden die aliphatischen oligomeren Polyisocyanate aus einem Diisocyanat mit 1 bis 15 Kohlenstoffatomen hergestellt. Vorzugsweise ist das Diisocyanat ausgewählt aus 1,5-Pentamethylen-Diisocyanat und/oder 1,6-HexamethylenDiisocyanat. Geeignete kommerziell erhältliche Polyisocyanate sind unter anderem Desmodur® ultra N3300, Desmodur® ultra N3600, Desmodur® N3200, Desmodur® eco N7300 und Desmodur® N3900 (erhältlich bei der Covestro Deutschland AG)

Die Komponente B) weist vorzugsweise eine mittlere NCO-Funktionalität pro Molekül von ≥ 2,0, bevorzugt von 2,3 bis 4,3, besonders bevorzugt von 2,5 bis 4,2, ganz besonders bevorzugt von 2,8 bis 4,1 und am meisten bevorzugt von 3,0 bis 4,0 auf. Die NCO-Funktionalität bezieht sich auf freie NCO-Gruppen und nicht auf latente NCO-Gruppen (wie beispielsweise die den Ring der Trimere bildenden NCO-Gruppen). Die mittlere NCO-Funktionalität der Komponente B wird, sofern nicht anders beschrieben, mittels Gelpermeationschromatographie (GPC) bestimmt. Die Funktionalität ist ein Ausdruck für die Zahl der reaktiven Gruppen pro Molekül, d.h. für die Zahl der potentiellen Verknüpfungsstellen bei der Ausbildung eines Netzwerks. Polyisocyanate, wie sie z.B. bei der Trimerisierung von Diisocyanaten gebildet

werden, bestehen jedoch nicht nur aus einer definierten Molekülsorte, sondern enthalten eine breite Verteilung unterschiedlicher Moleküle mit unterschiedlichen Funktionalitäten. Als Bestimmungsgröße für die Polyisocyanate wird daher die mittlere Funktionalität angegeben. Die mittlere Funktionalität von Polyisocyanaten ist durch das Verhältnis von zahlenmittlerem Molekulargewicht und Äquivalentgewicht eindeutig bestimmt und wird im Allgemeinen aus der mit Hilfe der GPC ermittelten Molekulargewichtsverteilung berechnet. Demnach lässt sich die mittlere NCO-Funktionalität nach Zuordnung der einzelnen Oligomere in der GPC mit den jeweiligen Funktionalitäten und Gewichtung über deren Massenanteil berechnen. Für die nur isocyanuratgruppentragenden und iminooxadiazinediongruppentragenden Polyisocyanate (PIC) ist sie beispielsweise auch einfach über den NCO-Gehalt des Polyisocyanates nach folgender Formel berechenbar:

$$\text{NCO-Funktionalität} = (6 * \text{NCO-Gehalt-PIC}) / [4 * \text{NCO-Gehalt-PIC} - \text{NCO-Gehalt-Monomer})]$$

Für andere isocyanatgruppentragende Polyisocyanate (Biurete, Uretdione) gilt, dass man die NCO-Funktionalität dann über die oben erwähnte Berechnung durchführen muss. Die Peaks in der GPC können, gegebenenfalls unter Zuhilfenahme weiterer Analyseverfahren wie NMR, IR und/oder MS, bestimmten Strukturen zugeschrieben werden. Mit den NCO-Funktionalitäten der ermittelten chemischen Strukturen und einer Gewichtung über deren Massenanteil kann in der GPC dann die mittlere NCO-Funktionalität des Gemisches der Polyisocyanate errechnet werden. Da bei der Oligomerisierung von Di- und Polyisocyanaten in der Regel keine reinen Produkte, sondern Verbindungen mit unterschiedlichen Oligomerisierungsgraden, d.h. Oligomerenmischungen entstehen, lässt sich die NCO-Funktionalität der entstandenen Verbindungen lediglich als Durchschnittswert und der Gehalt an NCO-Gruppen nur in Bezug auf das Gesamtgewicht der entstandenen Oligomerenmischung angeben. Eine solche Oligomerenmischung wird im Rahmen der vorliegenden Erfindung vereinfacht als ein "aliphatisches oligomeres Polyisocyanat" bezeichnet.

Des Weiteren ist es bevorzugt, wenn die Komponente B) einen Gehalt an freien NCO-Gruppen von 5,0 bis 30,0 Gew.-%, besonders bevorzugt von 10,0 bis 27,0 Gew.-% und ganz besonders bevorzugt von 15,0 bis 24,0 Gew.-%, bezogen auf das Gesamtgewicht der Komponente B), aufweist, bestimmt gemäß DIN EN ISO 11909:2007.

In einer Ausführungsform des erfindungsgemäßen Verfahrens beträgt die Isocyanat-Kennzahl ≥ 80, bevorzugt von 85 bis 115, besonders bevorzugt von 90 bis 110. Unter der Isocyanat-Kennzahl (auch Kennzahl, NCO/OH-Index oder Isocyanat-Index genannt) wird der Quotient aus der tatsächlich eingesetzten Stoffmenge [mol] an Isocyanat-Gruppen und der tatsächlich eingesetzten Stoffmenge [mol] an Isocyanat-reaktiven Gruppen, multipliziert mit 100, verstanden. Mit anderen Worten gibt die Kennzahl das prozentuale Verhältnis der tatsächlich eingesetzten Isocyanat-Menge zur stöchiometrischen, d.h. für die Umsetzung der OHÄquivalente berechnete Isocyanat-Menge an. Eine äquivalente Menge an NCO-Gruppen und NCO-reaktiven H-Atomen entspricht dabei einem NCO/OH-Index von 100.

$$\text{Kennzahl} = [(\text{mol Isocyanat-Gruppen}) / (\text{mol Isocyanat-reaktive Gruppen})] * 100$$

Weiterhin ist es bevorzugt, dass die Zusammensetzung einen Gehalt an monomeren Diisocyanaten von < 1,0 Gew.-%, besonders bevorzugt von < 0,5 Gew.-%, ganz besonders bevorzugt von < 0,3 Gew.-% und am meisten bevorzugt von < 0,1 Gew.-%, bezogen auf das Gesamtgewicht der Zusammensetzung, aufweist, bestimmt mittels Gaschromatographie nach DIN EN ISO 10283:2007-11.

## Komponente C):

Als Komponente C werden Treibmittel eingesetzt. Dies umfasst Wasser und/oder physikalische Treibmittel. Als physikalische Treibmittel werden beispielsweise Kohlendioxid und/oder leicht flüchtige organische Substanzen verwendet. Bei diesen leicht flüchtigen physikalischen Treibmitteln handelt es sich um cyclische Kohlenwasserstoffe wie beispielsweise Cyclopentan und Cyclohexan. Nicht cyclische Kohlenwasserstoffe sind u.a. Butan, n-Pentan und Isopentan. Darüber hinaus eignen sich die halogenhaltigen Kohlenwasserstoffe als physikalische Treibmittel. Diese sind Fluorkohlenwasserstoffe oder Perfluorverbindungen z. B. Perfluoralkane. Vorzugsweise wird Wasser als Komponente C) eingesetzt.

**Komponente D):**

Als Komponente D) können bekannte Katalysatoren wie z.B. Zinn-Katalysatoren (beispielsweise Dibutylzinnoxid, Dibutylzinndilaurat, Dimethylzinndineodecanoat, Dimethylzinn(IV)dimercaptid, Zinnoctoat, Zinnneodecanoat), Bismuth-2-ethylhexanoat, Cobalt-2-ethylhexanoat, Eisen-2-ethylhexanoat, Eisen(III)chlorid, aliphatische tertiäre Amine (beispielsweise Trimethylamin, Tetramethylbutandiamin), cycloaliphatische tertiäre Amine (beispielsweise 1,4-Dimethylpiperazin, 1,4-Diaza(2,2,2)bicyclooctan, 1,8-Diazabicyclo[5.4.0]undec-7-en, 1,5,7-Triazabicyclo[4.4.0]dec-5-en, N-Methyltriazabicyclo[4.4.0]dec-9-en), 1,1,3,3-Tetramethylguanidin, aliphatische Aminoether (beispielsweise Bis(2-Dimethylaminoethyl)ether, und N,N,N-Trimethyl-N-hydroxyethyl-bisaminoethylether), cycloaliphatische Aminoether (beispielsweise N-Ethylmorpholin, 4,4'-(Oxydi-2,1-ethandiyl)dimorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff). Die Katalysatoren können einzeln wie auch in Abmischung miteinander zugegeben werden. Die Katalysatoren können dabei als Gel- und/oder Treibkatalysatoren fungieren. Viele Katalysatoren sind keine reinen Gel- oder Treibkatalysatoren, sondern können für beide Zwecke eingesetzt werden. Einer der beiden Eigenschaften kann jedoch stärker ausgeprägt sein. Dabei gelten die Verbindungen Zinnoctoat oder -neodecanoat als nahezu reine Gelkatalysatoren und Bis(2-Dimethylaminoethylether) als ein reiner Treibkatalysator. Bei aliphatischen Isocyanaten wirkt 1,8-Diazabicyclo[5.4.0]undec-7-en (DBU) vorwiegend als Treibkatalysator.

Im Rahmen der Erfindung werden als Gelkatalysatoren vorzugsweise Dimethylzinndineodecanoat, Zinnoctoat,, Zinnneodecanoat oder Mischungen von diesen und als Treibkatalysatoren DBU (1,8-Diazabicyclo[5.4.0]undec-7-en), Tetramethylguanidin oder Mischungen von diesen eingesetzt.

Vorzugsweise umfasst oder besteht die Komponente D) aus mindestens einem Gelkatalysator und/oder mindestens einem Treibkatalysator.

**Komponente E):**

Des Weiteren können oberflächenaktive Zusatzstoffe, insbesondere Silikontensiden und stärker bevorzugt Siloxan-Polyoxyalkylen-Copolymeren und Polydimethylsiloxan-Polyoxyalkylen-Copolymeren bei der Herstellung der Schaumstoffe eingesetzt werden. Andere oberflächenaktive Zusatzstoffe, wie z.B. Emulgatoren können ebenfalls enthalten sein. Bei den Schaumstabilisatoren sind insbesondere solche mit niedriger Emission wie beispielsweise Produkte der Tegostab® BF-Serie (Firma: Evonik Operations GmbH) geeignet.

**Komponente F):**

Optionale von Komponente E) verschiedene Hilfs- und Zusatzstoffe wie Reaktionsverzögerer (beispielsweise sauer reagierende Stoffe wie Salzsäure oder organische Säurehalogenide), Zellregler (beispielsweise Paraffine oder Fettalkohole oder Dimethylpolysiloxane), Pigmente, Farbstoffe, Flammschutzmittel, (beispielsweise Trikresylphosphat oder Ammoniumpolyphosphat), weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel können ebenfalls als Komponente F) eingesetzt werden. Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

**Aliphatische Polyurethan-Weichschaumstoffe auf Basis nachwachsender (biobasierter) bzw. nachhaltiger Rohstoffe:**

Die im erfindungsgemäßen Verfahren einzusetzenden Komponenten können biobasiert oder nicht-biobasiert sein. Allerdings ist es im Rahmen einer umweltfreundlichen Ausrichtung von Produktionsprozessen generell wünschenswert, Ausgangsstoffe auf Basis nachwachsender (biobasierter) bzw. nachhaltiger Rohstoffe einzusetzen.

Der Begriff "biobasiert" wird im Rahmen der vorliegenden Erfindung dahingehend definiert, dass eine Komponente, eine Verbindung, ein Material oder ähnliches - wie beispielsweise aliphatische oligomere Polyisocyanate gemäß Komponente B) oder ein Ausgangsstoff zur Herstellung eines solchen aliphatischen oligomeren Polyisocyanats - aus erneuerbaren Quellen (wie beispielsweise aus Pflanzen, Mikroben, Algen oder Tieren) erhalten wurde oder daraus präpariert wurde. Demgegenüber stehen Verbindungen und Materialien, die aus nicht-erneuerbaren Quellen erhalten oder präpariert wurden. Nicht-erneuerbare Quellen umfassen z.B. fossile Rohstoffe, die in geologischer Vorzeit aus toten Lebewesen entstanden sind. Dies sind insbesondere Erdöl, Braunkohle, Steinkohle, Torf und Erdgas. Verbindungen und Materialien, die aus nicht-erneuerbaren Quellen erhalten oder präpariert wurden, werden im Rahmen der

vorliegenden Erfindung als nicht-biobasiert oder "künstlich hergestellt" definiert. Biobasierte Ausgangsstoffe können unmittelbar aus den oben genannten erneuerbaren Quellen gewonnen werden oder durch Folgereaktionen aus Verbindungen oder Materialien, die aus diesen Quellen erhalten wurden, hergestellt werden. So können die aliphatischen oligomeren Polyisocyanate der Komponete B) auf Di- und Polyisocyanaten basieren, die wiederum aus biobasierten Diaminen hergestellt wurden. Ein Beispiel für ein solches Diamin stellt 1,5-Diaminopentan (1,5-PDA) dar.

Insbesondere ist es ebenfalls generell wünschenswert, $CO_2$-basierte Ausgangsstoffe in relativ großen Mengen einzusetzen. Bei den unter A3) beschriebenen Polyethercarbonatpolyolen handelt es sich um solche Ausgangsstoffe. Bei Verwendung dieser Verbindungen kann die $CO_2$-Bilanz der erfindungsgemäßen Polyurethan-Weichschäume deutlich verbessert werden.

Auch bei Verwendung von Polyesterpolyolen (A4) als Polyolkomponenten können Polyurethanweichschäume hergestellt werden (WO 2014/064130). Durch Austausch der in WO 2014/064130 verwendeten aromatischen Isocyanate durch auf Basis nachwachsender Rohstoffe wie dem hier verwendetem 1,3,5-Tris(6-isocyanatopentyl)-1,3,5-triazinan-2,4,6-trion (B1) und zusätzlich biobasierten niedermolekularen Alkoholen, wie beispielsweise Bioethanol, können Polyurethan-Weichschaumstoffe mit eine Anteil nachwachsender Rohstoffe von ≥ 65 %, bevorzugt ≥ 75 % und besonders bevorzugt von größer ≥ 80% hergestellt werden. Überraschend wurde auch gefunden, dass bei Verwendung von 1,3,5-Tris(6-isocyanatopentyl)-1,3,5-triazinane-2,4,6-trione (B1) und Biopolyesterpolyolen (A4), hergestellt aus Biobernsteinsäure und Diethylenglycol mit einer OH-Zahl von 63,2, einer Estergruppenkonzentration von bis zu 10,1 mol/kg zu Schäumen verarbeitet werden konnten, die bei Verwendung von Toluylendiisocyanat-Abmischungen aus Toluylendiisocyanat mit einem Anteil von ca. 80 Gew.-% 2,4-Toluylendiisocyanat und ca. 20 Gew.-% 2,6-Toluylendiisocyanat und Toluylendiisocanant mit einem Anteil von ca. 65 Gew.-% 2,4-Toluylendiisocyanat und ca. 35 Gew.-% 2,6-Toluylendiisocyanat (C2) nicht hergestellt werden konnten, wie diese in WO 2014/064130 A1 beschrieben sind .

## Schaumherstellung:

Die Polyurethan-Schaumstoffe liegen als Polyurethan-Weichschaumstoffe vor und können als Form- oder auch als Blockschaumstoffe hergestellt werden. Gegenstand der Erfindung ist daher ein Verfahren zur Herstellung der - optional anteilig biobasierten - PolyurethanWeichschaumstoffe.

Die nach der Erfindung erhältlichen - gegebenfalls anteilig biobasierten - verfärbungsbeständigen Polyurethanweichschaumstoffe finden beispielsweise folgende Anwendung: Textilschäume (beispielsweise in BHs, Schulterposter, Möbelpolsterungen, Textileinlagen), körperstützende Elemente (beispielsweise in Polstern, Matratzen, Möbeln, Automobilsitzen, Motorradsitzen, Kopfstützen, Armlehnen), Schwämme sowie Schaumstofffolien zur Verwendung in Automobilteilen (wie beispielsweise in Dachhimmeln, Türseitenverkleidungen und Sitzauflagen).

Die durch das erfindungsgemäße Verfahren erhaltenen oder erhältlichen PolyurethanWeichschaumstoffe weisen insbesondere eine Stauchhärte (im 4. Zyklus) von ≤ 14,0 kPa, bevorzugt von ≤ 12,0 kPa, besonders bevorzugt von 2,0 kPa bis 8,0 kPa und ganz besonders bevorzugt von 3,0 bis 7,0 kPa, gemessen nach DIN EN ISO 3386-1 und/oder einen Druckverformungsrest-Wert (DVR) von ≤ 3,5 %, bevorzugt von ≤ 3,0 %, weiter bevorzugt von ≤ 2,5 % und besonders bevorzugt von 0,1 % bis 2,0 %, gemessen nach DIN EN ISO 1856-2008 auf.

## Ausführungsformen:

Die vorliegende Erfindung betrifft insbesondere die folgenden Ausführungsformen:
Nach einer ersten Ausführungsform betrifft die Erfindung ein Verfahren zur Herstellung von Polyurethan-Weichschaumstoffen durch Umsetzung einer Zusammensetzung mit den Komponenten

A) mindestens eine monohydroxyfunktionelle Verbindung und mindestens ein Polyol und

B) mindestens ein aliphatisches oligomeres Polyisocyanat
bei einer Isocyanat-Kennzahl von wenigstens 80, wobei die Zusammensetzung weiterhin die Komponenten C) bis F) enthält

C) mindestens ein chemisches und/oder physikalisches Treibmittel;

D) mindestens einen Katalysator;

E) gegebenenfalls eine oberflächenaktive Verbindung und

F) gegebenenfalls von Komponente E) verschiedene Hilfs- und Zusatzstoffe.

Nach einer zweiten Ausführungsform betrifft die Erfindung ein Verfahren nach Ausführungsform 1, dadurch gekennzeichnet, dass die monohydroxyfunktionelle Verbindung der Komponente A) ausgewählt ist aus der Gruppe, umfassend oder bestehend aus

A1) primären, sekundären und/oder tertiären monohydroxyfunktionellen Verbindungen mit 1 bis 12 Kohlenstoffatomen, bevorzugt primären monohydroxyfunktionellen Verbindungen und/oder

A2) polymeren monohydroxyfunktionellen Verbindung, bevorzugt Polyethermonoole, Polycarbonatmonoole, Polyestercarbonatmonoole, Polyethercarbonatmonoole, Polyetherestercarbonatmonoole und/oder Mischungen davon, wobei die polymeren monohydroxyfunktionelle Verbindung besonders bevorzugt eine primäre Hydroxylgruppe aufweist.

Nach einer dritten Ausführungsform betrifft die Erfindung ein Verfahren nach Ausführungsform 2, dadurch gekennzeichnet, dass die monohydroxyfunktionelle Verbindung A1) ausgewählt ist aus der Gruppe, umfassend oder bestehend aus acyclischen und/oder cyclischen monohydroxyfunktionellen Alkanolen und/oder acyclischen und/oder cyclischen monohydroxyfunktionellen Alkenolen, bevorzugt Methanol, Ethanol, iso-Propanol, n-Propanol, iso-Butanol, n-Butanol, sec-Butanol, tert-Butanol, Pentan-1-ol, Pentan-2-ol, Pentan-3-ol, 2-Methyl-butan-1-ol, 2-Methyl-butan-2-ol, 3-Methyl-butan-1-ol, 3-Methylbutan-2-ol, 2,2-Dimethyl-propan-1-ol, Hexan-1-ol, Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2-Ethyl-1-butanol,2-Methyl-3-butin-2-ol, 3-Butin-1-ol, Propagylalkohol, 1-tert-Butoxy-2-propanol, 1-Heptanol, 2-Heptanol, 3-Heptanol, 4-Heptanol, 1-Octanol, 2-Octanol, 3-Octanol, 4-Octanol, 1-Nonanol, 2-Nonanol, 3-Nonanol, 4-Nonanol, 5-Nonanol, 1-Decanol, 2-Decanol, 3-Decanol, 4-Decanol, 5-Decanol, 1-Undecanol, 2-Undecanol, 3-Undecanol, 4-Undecanol, 5-Undecanol, 6-Undecanol, 1-Dodecanol, 2-Dodecanol, 3-Dodecanol, 4-Dodecanol, 5-Dodecanol, 6-Dodecanol oder Mischungen davon.

Nach einer vierten Ausführungsform betrifft die Erfindung ein Verfahren nach Ausführungsform 2 oder 3, dadurch gekennzeichnet, dass die polymere monohydroxyfunktionelle Verbindung A2) eine Hydroxylzahl von 20 bis 250 mg KOH/g aufweist, vorzugsweise 20 bis 112 mg KOH/g und besonders bevorzugt 20 bis 50 mg KOH/g, gemessen nach DIN 53240-3:2016-03.

Nach einer fünften Ausführungsform betrifft die Erfindung ein Verfahren nach einer der Ausführungsformen 2 bis 4, dadurch gekennzeichnet, dass der Stoffmengenanteil der OH-Gruppen der Summe der Komponenten A1) und A2) 25,0 bis 90,0 mol-%, bevorzugt 35,0 bis 85,0 mol-%, besonders bevorzugt 40,0 bis 80,0 mol-% beträgt, bezogen auf die Gesamtstoffmenge der OH-Gruppen der Komponente A).

Nach einer sechsten Ausführungsform betrifft die Erfindung ein Verfahren nach einer der Ausführungsformen 2 bis 5, dadurch gekennzeichnet, dass das Äquivalentverhältnis der OH-Gruppen der Summe der Komponenten A1) und A2) zu den NCO-Gruppen der Komponenten B) 0,15 bis 0,65, bevorzugt 0,20 bis 0,55 und besonders bevorzugt 0,25 bis 0,50 beträgt.

Nach einer siebten Ausführungsform betrifft die Erfindung ein Verfahren nach einer der vorstehenden Ausführungsformen, dadurch gekennzeichnet, dass das Polyol der Komponente A) ausgewählt ist aus der Gruppe, umfassend oder bestehend aus

A3) Polyethercarbonatpolyolen,

A4) Polyetherpolyolen, Polyesterpolyolen, Polycarbonatpolyolen

und/oder Mischungen von diesen, wobei das Polyol der Komponente A) bevorzugt wenigstens ein Polyethercarbonatpolyol A3) umfasst oder daraus besteht.

Nach einer achten Ausführungsform betrifft die Erfindung ein Verfahren nach einer der vorstehenden Ausführungsformen, dadurch gekennzeichnet, dass die Komponente A) zusätzlich mindestens einen Kettenverlängerer und/oder Vernetzer ausgewählt aus der Gruppe, umfassend oder bestehend aus

A5) NCO-reaktiven Verbindungen mit einer OH- und/oder NH-Funktionalität von mindestens 2 und einem Molekulargewicht von 62 bis 800 g/mol enthält, wobei die NCO-reaktive Verbindung A5) bevorzugt ausgewählt ist aus der Gruppe, umfassend oder bestehend aus Ethylenglykol, Diethylenglykol, 1,2-Propandiol, 1,3-Propandiol, 1,4-Butandiol, 1,6-Hexandiol, Glycerin, 1,1,1-Trimethylolpropan, Pentaerythrit, Monoethanolamin, Diethanolamin oder Mischungen davon.

Nach einer neunten Ausführungsform betrifft die Erfindung ein Verfahren nach einer der vorstehenden Ausführungsformen, dadurch gekennzeichnet, dass das aliphatische oligomere Polyisocyanat der Komponente B) Isocyanat-tragende Oligomere, gebildet aus (2n+1) aliphatischen Polyisocyanaten, umfasst, wobei n eine natürliche Zahl von 1 bis 10 ist und das aliphatische oligomere Polyisocyanat der Komponente B) zu wenigstens 90,0 Gew.-% aus diesen Isocyanat-tragenden Oligomeren besteht.

Nach einer zehnten Ausführungsform betrifft die Erfindung ein Verfahren nach Ausführungsform 9, dadurch gekennzeichnet, dass das aliphatische oligomere Polyisocyanat der Komponente B) ein Isocyanat-tragendes Trimer umfasst, wobei die Komponente B) insbesondere eine Mischung aus diesem Trimer und wenigstens einem weiteren Isocyanat-tragenden Oligomer enthält, bei dem n eine natürliche Zahl von 2 bis 10 ist und das aliphatische oligomere Polyisocyanat der Komponente B) zu wenigsten 30,0 Gew.-%, bevorzugt 30,0 bis 80,0 Gew.-% aus diesen Isocyanat-tragenden Trimeren besteht.

Nach einer elften Ausführungsform betrifft die Erfindung ein Verfahren nach einer der vorstehenden Ausführungsformen, dadurch gekennzeichnet, dass das aliphatische oligomere Polyisocyanat der Komponente B) Isocyanurat- und/oder Iminooxadiazindion-Gruppen enthält.

Nach einer zwölften Ausführungsform betrifft die Erfindung ein Verfahren nach einer der vorstehenden Ausführungsformen, dadurch gekennzeichnet, dass das aliphatische oligomere Polyisocyanat der Komponente B) ein Isocyanat-tragendes Trimer der Formel (VI) und/oder Formel (VII), jeweils gebildet aus 3 aliphatischen Polyisocyanaten, umfasst, wobei R unabhängig voneinander eine aliphatische C1 bis C15 Kohlenstoffkette ist.

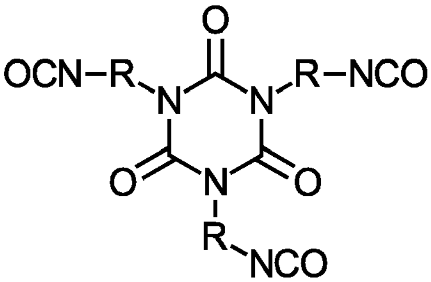
Formel (VI)

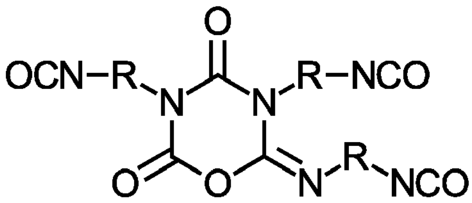
Formel (VII)

Nach einer dreizehnten Ausführungsform betrifft die Erfindung ein Verfahren nach einer der vorstehenden Ausführungsformen, dadurch gekennzeichnet, dass das aliphatische oligomere Polyisocyanat der Komponente B) aus einem Diisocyanat mit 1 bis 15 Kohlenstoffatomen hergestellt ist, wobei das Diisocyanat vorzugsweise ausgewählt ist aus 1,5-Pentamethylen-Diisocyanat und/oder 1,6-Hexamethylen-Diisocyanat.

Nach einer vierzehnten Ausführungsform betrifft die Erfindung ein Verfahren nach einer der vorstehenden Ausführungsformen, dadurch gekennzeichnet, dass die Komponente B) eine mittlere NCO-Funktionalität pro Molekül von $\geq$ 2,0, bevorzugt von 2,3 bis 4,3, besonders bevorzugt von 2,5 bis 4,2, ganz besonders bevorzugt von 2,8 bis 4,1 und am meisten bevorzugt von 3,0 bis 4,0 aufweist.

Nach einer fünfzehnten Ausführungsform betrifft die Erfindung ein Verfahren nach einer der vorstehenden Ausführungsformen, dadurch gekennzeichnet, dass die Komponente B) einen Gehalt an freien NCO-Gruppen von 5,0 bis 30,0 Gew.-%, bevorzugt von 10,0 bis 27,0 Gew.% und besonders bevorzugt von 15,0 bis 24,0 Gew.-%, bezogen auf das Gesamtgewicht der Komponente B), aufweist, bestimmt gemäß DIN EN ISO 11909:2007.

Nach einer sechszehnten Ausführungsform betrifft die Erfindung ein Verfahren nach einer der vorstehenden Ausführungsformen, dadurch gekennzeichnet, dass die Zusammensetzung einen Gehalt an monomeren Diisocyanaten von < 1,0 Gew.-%, besonders bevorzugt von < 0,5 Gew.-%, ganz besonders bevorzugt von < 0,3 Gew.-% und am meisten bevorzugt von < 0,1 Gew.-%, bezogen auf das Gesamtgewicht der Zusammensetzung, aufweist, bestimmt mittels Gaschromatographie nach DIN EN ISO 10283:2007-11.

Nach einer siebzehnten Ausführungsform betrifft die Erfindung ein Verfahren nach einer der vorstehenden Ausführungsformen, dadurch gekennzeichnet, dass die Komponente D) mindestens einen Gelkatalysator und/oder mindestens einen Treibkatalysator umfasst oder daraus besteht.

Nach einer achtzehnten Ausführungsform betrifft die Erfindung ein Verfahren nach einer der vorstehenden Ausführungsformen, dadurch gekennzeichnet, dass die Umsetzung bei einer Isocyanat-Kennzahl von 85 bis 115 erfolgt, bevorzugt von 90 bis 110.

Nach einer neunzehnten Ausführungsform betrifft die Erfindung einen Polyurethan-Weichschaumstoff, erhalten oder erhältlich durch ein Verfahren nach einer der Ausführungsformen 1 bis 18.

Nach einer zwanzigsten Ausführungsform betrifft die Erfindung einen Polyurethan-Weichschaumstoff nach Ausführungsform 19, dadurch gekennzeichnet, dass der Polyurethan-Weichschaumstoff eine Stauchhärte (im 4. Zyklus) von $\leq$ 14,0 kPa aufweist, bevorzugt von $\leq$ 12,0 kPa, besonders bevorzugt von 2,0 kPa bis 8,0 kPa und ganz besonders bevorzugt von 3,0 bis 7,0 kPa, gemessen nach DIN EN ISO 3386-1.

Nach einer einundzwanzigsten Ausführungsform betrifft die Erfindung einen Polyurethan-Weichschaumstoff nach Ausführungsform 19 oder 20, dadurch gekennzeichnet, dass der Polyurethan-Weichschaumstoff einen Druckverformungsrest-Wert (DVR) von ≤ 3,5 % aufweist, bevorzugt von ≤ 3,0 %, weiter bevorzugt von ≤ 2,5 % und besonders bevorzugt von 0,1 % bis 2,0 %, gemessen nach DIN EN ISO 1856-2008.

Nach einer zweiundzwanzigsten Ausführungsform betrifft die Erfindung die Verwendung eines Polyurethan-Weichschaumstoffs nach einer der Ausführungsformen 19 bis 21 als oder zur Herstellung von körperstützenden Elementen, insbesondere Polstern, Matratzen, Möbeln, Automobilsitzen und Motorradsitzen.

Nach einer dreiundzwanzigsten Ausführungsform betrifft die Erfindung die Verwendung einer monohydroxyfunktionellen Verbindung in Kombination mit einem aliphatischen oligomeren Polyisocyanat bei einer Isocyanat-Kennzahl von wenigstens 80, insbesondere von 85 bis 115, bevorzugt von 90 bis 110 zur Erniedrigung der Stauchhärte und/oder des Druckverformungsrest-Werts von Polyurethan-Weichschaumstoffen.

**Beispiele und Vergleichsbeispiele:**

Die vorliegende Erfindung wird im Folgenden anhand von Beispielen erörtert, ist jedoch nicht auf diese beschränkt.

Verwendete Komponenten:

Verwendete Komponenten A1):

- Ethanol
- Butanol

Verwendete Komponente A2):

- Desmophen® LB 25 (Polyethermonool, OH-Zahl: 25 mg KOH/g (nach DIN 53240-3:2016-03), Viskosität: 4600 mPa·s)

Verwendete Komponente A3):

- Cardyon® LC 05 (Polyethercarbonatpolyol, OH-Zahl: 55 mg KOH/g, typische $CO_2$-Inkorporation: 14 Gew.-%)

Verwendete Komponenten A5):

- Diethylenglykol (DEG)
- Diethanolamin (DEA)

Verwendete Komponente B1):

- Desmodur® eco N 7300 (Biobasiertes, Isocyanuratgruppen-haltiges aliphatisches Polyisocyanat auf Basis von 1,5-Pentamethylen-Diisocyanat (PDI) mit einem NCO-Gehalt von 21,9 Gew.-% (nach DIN EN ISO 11909:2007), einer mittleren NCO-Funktionalität von ≥ 3,0 (nach GPC), einem Gehalt an monomerem PDI von maximal 0,3 Gew.-% und einer Viskosität von 9500 mPa·s (bei 23 °C, bestimmt nach DIN EN ISO 3219))

Verwendete Komponente B2):

- Desmodur® ultra N 3600 (Isocyanuratgruppen-haltiges aliphatisches Polyisocyanat auf Basis von 1,6-Diisocyanatohexan (HDI) mit einem NCO-Gehalt von 23,0 Gew.-% (nach DIN EN ISO 11909:2007), einer mittleren NCO-Funktionalität von 3,2 (nach GPC), einem Gehalt an monomerem HDI von maximal 0,1 Gew.-% und einer Viskosität von 1200 mPa·s (23 °C, bestimmt nach DIN EN ISO 3219))

Verwendete Komponente C):

- Wasser

Verwendete Komponenten D):

- Kosmos® Pro 1 (Zinn(II)-neodecanoat)
- Fomrez® UL-28 (Dimethylzinnneodecanoat)
- DBU (1,8-Diazabicyclo[5.4.0]undec-7-en)

Verwendete Komponenten E):

- Tegostab® BF2370 (Firma Evonik Operations GmbH, Essen)
- Tegostab® B8783 LF 2 (Firma Evonik Operations GmbH, Essen)

Verwendete Komponenten F):

- Ortegol® 500 (Firma Evonik Operations GmbH, Essen)

Verwendete Messverfahren:

- Die Bestimmung der Stauchhärte (CV) erfolgt nach DIN EN ISO 3386-1. Für die Messungen werden zwei bzw. drei Prüfkörper mit den Dimensionen 6 cm x 6 cm x 3 cm geschnitten. Die Prüfungen werden auf dem Gerät 2,5kN RetroLine der Firma Zwick/Roell bei 22 °C und 47% relativer Luftfeuchte durchgeführt. Die Messgeometrie besteht aus einer Grundplatte, auf die der Probenkörper gelegt wird, und einer Druckplatte. Zu Beginn der Messung entspricht der Abstand zwischen beiden Platten der Höhe der Probe. Die Messungen bestehen aus drei Vorzyklen und einem anschließenden Messzyklus, wobei für den ersten Vorzyklus und den Messzyklus Daten erfasst werden. Ein Zyklus besteht aus einer Deformation mit einer Geschwindigkeit von 100 mm/min im Bereich von 0 bis 70 % und einer Entlastung bis die Messplatten wieder den Ursprungsabstand erreicht haben. Aus den Messwerten wird die Druckspannung/Stauchhärte bei verschiedenen Deformationen bestimmt. Ein häufig angegebener Wert ist die Stauchhärte bei 40 % Verformung ($CV_{40}$), die sich nach der nachfolgenden Formel berechnen lässt.

$$CV_{40}[kPa] = \frac{F_{40}}{A_{Stauch}} \cdot 1000$$

  Mit:

  $CV_{40}$ = Stauchhärte/Druckspannungswert bei einer Verformung von 40% [kPa]

  $F_{40}$ = Kraft bei 40 % Verformung, ermittelt im 4. Belastungszyklus [N]

  $A_{Stauch}$ = Oberfläche des Probenkörpers [$mm^2$]

- Der Druckverformungsrest (DVR) wird nach DIN EN ISO 1856-2008 bestimmt. Dazu werden jeweils drei Prüfkörper der Maße 5 cm x 5 cm x 2,5 cm geschnitten. Diese werden so zwischen zwei Platten gespannt, dass sie um 50% komprimiert werden und so für 22 h in einem Ofen bei 70 °C gelagert. Anschließend werden die Schäume aus der Kompressionshalterung entfernt und nach 30 min Lagerung bei 22 °C die Höhe der Prüfkörper bestimmt. Es werden 3 Prüfkörper untersucht und der mittlere DVR als Ergebnis angegeben;
- Viskosität: Die Viskositätsmessung der Desmodur-Typen (Desmodur ultra N 3600, Desmodur ultra N3300, Desmodur eco N7300) erfolgt nach DIN EN ISO 3219 mit RheolabQC-Geräten der Firma Anton Paar;
- Startzeit (oder auch Liegezeit): Es ist der Zeitraum vom Beginn des Mischvorganges bis zu einer optisch wahrnehmbaren Veränderung des Reaktionsgemisches, also bis zum ersten Aufsteigen des Reaktionsgemisches. Um das Aufsteigen besser zu erkennen, können Hilfslinien (schräg nach oben verlaufende Linien) im Gefäß, in welches das Reaktionsgemisch gefüllt wurde, mit einem Stift eingezeichnet werden.
- Abbindezeit (Klebfreizeit): Unter Abbindezeit wird im Rahmen der Erfindung die so genannte Klebfreizeit ("tack-free-time") verstanden. Die Klebfreizeit ist dabei die Zeitspanne vom Beginn der Vermischung bis zu dem Zustand/Zeitpunkt, bei dem die Oberfläche der Schaumstoffmasse nicht mehr klebrig ist. Sie wird bestimmt, indem man den nicht mehr aufsteigenden Schaum mittels eines Holzstäbchens tupfend berührt. Der Zeitpunkt, ab dem kein Ankleben mehr erfolgt wird als Klebfreizeit bezeichnet.
- Rohdichte (beziehungsweise Raumgewicht) nach DIN EN ISO 845

- Zugversuch nach DIN EN ISO 1798:2008 (hierbei wird die Bruchspannung und die Bruchdehnung bestimmt)

Beispiele:

Beispiel 1

Eine Isocyanat-reaktive Zusammensetzung aus 120,33 g Cardyon® LC05, 8,65 g Ethanol, 3,01 g Diethylenglykol, 1,81 g Diethanolamin, 1,81 g Wasser, 2,25 g Tegostab® BF 2370 und 0,50 g DBU wurde mit einem Rührer bei 1150 U/min für 30 s vermischt. Dann wurden 1,25 g Kosmos® Pro 1 und 2,37 g Fomrez® UL-28 zur Mischung gegeben und diese wiederum mit einem Rührer vermischt (1150 U/min für 15 s). Diese Mischung wurde mit 108,03 g Desmodur® ultra N 3600 mit einem Rührer bei 2100 U/min für 15 s vermischt und in eine Form gegossen. Die Rohstofftemperatur betrug 23 °C. Die Aushärtung erfolgte bei Umgebungstemperatur. Der Schaum war nach 130 s abgebunden.

Weitere Beispiele und Vergleichsbeispiele

Die weiteren in der nachstehenden Tabelle aufgeführten Beispiele und Vergleichsbeispiele wurden mit den in dieser Tabelle angegeben Mengen (in [g]) analog zu dem Beispiel 1 hergestellt. In den Beispielen, wo die Komponente A2 zusätzlich eingesetzt wurde, erfolgte die Zugabe zusammen mit den Komponenten, die mit einem Rührer bei 1150 U/min für 30 s vermischt wurden. Die Komponente B2 wurde in den entsprechenden Beispielen und Vergleichsbeispielen analog zur Komponente B1 eingesetzt. Gleiches gilt für die Komponenten E) und F).

| **Komponente** | OHZ | Beispiel 1 | Beispiel 2 | Beispiel 3 | Beispiel 4 | Beispiel 5 | Beispiel 6 | Vergleichsbeispiel 1 | Vergleichsbeispiel 2 |
|---|---|---|---|---|---|---|---|---|---|
| A1 (Ethanol) | 1218 | 8,65 | 14,55 | - | 8,27 | 13,87 | 8,11 | - | - |
| A1 (Butanol) | 756 | - | - | 14,43 | - | - | - | - | - |
| A2 | 25 | - | 14,35 | - | - | - | 21,08 | - | - |
| A3 | 55 | 120,33 | 68,12 | 103,61 | 115,07 | 97,60 | 95,42 | 140,13 | 146,16 |
| A5 (Diethylenglykol) | 1057 | 3,01 | 1,70 | 2,59 | 2,88 | 2,44 | 2,39 | 3,50 | 3,65 |
| A5 (Diethanolamin) | 1609 | 1,81 | 1,02 | 1,55 | 1,73 | 1,46 | 1,43 | 2,10 | 2,19 |
| C | 6228 | 1,81 | 2,18 | 2,07 | 1,73 | 1,46 | 1,86 | 2,10 | 2,19 |
| D (Kosmos® Pro 1) | | 1,25 | 1,25 | 0,75 | 1,25 | 1,25 | 1,25 | 1,25 | 1,25 |
| D (Fomrez® UL-28) | | 2,37 | 2,37 | 2,37 | 2,37 | 2,37 | 2,37 | 2,25 | 2,25 |
| D (DBU) | | 0,50 | 0,50 | 0,50 | 0,50 | 0,50 | 0,50 | 0,62 | 0,62 |
| E (Tegostab® BF2370) | | 2,25 | 2,25 | - | 1,00 | 2,25 | 2,25 | 1,00 | 1,00 |
| E (Tegostab® B8783 LF2) | | - | - | 0,41 | - | - | - | - | - |
| F | | - | - | 0,10 | - | - | - | - | - |
| B1 | | - | 141,70 | 121,61 | 115,21 | 126,79 | 113,34 | 97,04 | - |
| B2 | | 108,03 | - | - | - | - | - | - | 90,68 |
| Summe | | 250 | 250 | 250 | 250 | 250 | 250 | 250 | 250 |
| Kennzahl | | 100 | 104,5 | 101,8 | 99,9 | 100,1 | 101,2 | 99,5 | 99,5 |
| Äquivalentverhältnis* | | 0,31 | 0,44 | 0,31 | 0,30 | 0,46 | 0,32 | - | |
| Startzeit [s] | | 63 | 51 | 49 | 58 | 52 | 65 | 65 | 60 |
| Abbindezeit (Klebfreizeit) [s] | | 130 | 180 | 120 | 150 | 100 | 198 | 180 | 180 |
| Raumgewicht [kg/m³] | | 100 | 84 | 85 | 111 | 114 | 106 | 109 | 104 |
| Bruchspannung [kPa] | | 67 | 84 | 86 | 97 | 100 | 72 | 79 | 79 |
| Bruchdehnung [%] | | 147 | 147 | 138 | 79 | 176 | 103 | 62 | 67 |
| DVR [%] | | 1,8 | 0,6 | 1,6 | 1,2 | 0,5 | 1,2 | 3,9 | 2,3 |

(fortgesetzt)

| **Komponente** | OHZ | Beispiel 1 | Beispiel 2 | Beispiel 3 | Beispiel 4 | Beispiel 5 | Beispiel 6 | Vergleichsbeispiel 1 | Vergleichsbeispiel 2 |
|---|---|---|---|---|---|---|---|---|---|
| Stauchhärte ($CV_{40}$, 40% Kompression) 4. Zyklus [kPa] | | 5,3 | 3,9 | 6,1 | 11,9 | 7,6 | 6,1 | 14,1 | 14,5 |

* Aquivalentverhältnis der OH-Gruppen der Summe der Komponenten A1) und A2) zu den NCO-Gruppen der Komponenten B).

Zunächst ist deutlich zu erkennen, dass generell der Einsatz von monohydroxyfunktionellen Verbindungen (bei der Herstellung von aliphatischen Weichschäumen auf Basis von Polyisocyanaten) - wie beispielsweise Ethanol - im Vergleich zu den Vergleichsbeispielen ohne solche Verbindungen sowohl zu einer deutlichen Verringerung der Stauchhärte als auch des Druckverformungsrest-Werts führt. Dementsprechend werden bei den erfindungsgemäßen Zusammensetzungen weichere Schäume mit verbesserten Rückstellvermögen erhalten. Überdies können trotzdem Schäume erhalten werden, die ähnliche Raumgewichte wie die Vergleichsbeispiele aufweisen (siehe beispielsweise Beispiele 1, 4, 5 und 6 im Vergleich zu den Vergleichsbeispiele 1 und 2). Dadurch eignen sich die erhaltenen aliphatischen Polyurethan-Weichschaumstoffe sehr gut dafür, hochwertige körperstützende Elemente wie beispielsweise Matratzen herzustellen.

Des Weiteren zeigt der Vergleich von Beispiel 4 und Beispiel 5, dass ein höherer Gehalt an monohydroxyfunktionellen Verbindungen bei nahezu gleicher Raumdichte der Schäume zu einem verbesserten Druckverformungsrest-Wert und einer geringeren Stauchhärte führt.

Der Vergleich von Beispiel 4 und Beispiel 6 zeigt, dass die Verwendung einer monohydroxyfunktionellen Verbindungen A1) (hier Ethanol) in Kombination mit einer polymeren monohydroxyfunktionellen Verbindung A2) (hier Polyethermonool) vorteilhaft ist, um die Stauchhärte bei ähnlichem Raumgewicht der Schäume zu senken. Darüber hinaus zeigt das Beispiel 2, dass durch die Kombination von monohydroxyfunktionellen Verbindungen A1) mit polymeren monohydroxyfunktionellen Verbindungen A2) Polyurethan-Weichschaumstoffe mit sehr geringer Stauchhärte sowie geringen Druckverformungsrest-Werten mit guten Raumgewichten erhalten werden können.

Schließlich demonstrieren die Beispiele 2 bis 6 im Vergleich mit dem Beispiel 1 und den Vergleichsbeispielen, dass das erfindungsgemäße Verfahren auch unter Einsatz von biobasierten und nachhaltigen Edukten (wie beispielsweise Desmodur® eco N 7300 und Cardyon® LC 05) zu Polyurethan-Weichschaumstoffen mit geringer Stauchhärte sowie geringen Druckverformungsrest-Werten führt. Daher eignet sich das erfindungsgemäßen Verfahren auch dafür, Polyurethan-Weichschaumstoff mit verbesserter Umweltbilanz (Nachhaltigkeit etc.) und gleichzeitig sehr guten Eigenschaften herzustellen.

**Patentansprüche**

1. Verfahren zur Herstellung von Polyurethan-Weichschaumstoffen durch Umsetzung einer Zusammensetzung mit den Komponenten

   A) mindestens eine monohydroxyfunktionelle Verbindung und mindestens ein Polyol und
   B) mindestens ein aliphatisches oligomeres Polyisocyanat
   bei einer Isocyanat-Kennzahl von wenigstens 80, insbesondere von 85 bis 115, bevorzugt von 90 bis 110, wobei die Zusammensetzung weiterhin die Komponenten C) bis F) enthält
   C) mindestens ein chemisches und/oder physikalisches Treibmittel;
   D) mindestens einen Katalysator;
   E) gegebenenfalls eine oberflächenaktive Verbindung und
   F) gegebenenfalls von Komponente E) verschiedene Hilfs- und Zusatzstoffe.

2. Verfahren nach Anspruch 1, **dadurch gekennzeichnet, dass** die monohydroxyfunktionelle Verbindung der Komponente A) ausgewählt ist aus der Gruppe, umfassend oder bestehend aus

   A1) primären, sekundären und/oder tertiären monohydroxyfunktionellen Verbindungen mit 1 bis 12 Kohlenstoffatomen, bevorzugt primären monohydroxyfunktionellen Verbindungen und/oder
   A2) polymeren monohydroxyfunktionellen Verbindung, bevorzugt Polyethermonoole, Polycarbonatmonoole, Polyestercarbonatmonoole, Polyethercarbonatmonoole, Polyetherestercarbonatmonoole und/oder Mischungen davon, wobei die polymeren monohydroxyfunktionelle Verbindung besonders bevorzugt eine primäre Hydroxylgruppe aufweist.

3. Verfahren nach Anspruch 2, **dadurch gekennzeichnet, dass** die monohydroxyfunktionelle Verbindung A1) ausgewählt ist aus der Gruppe, umfassend oder bestehend aus acyclischen und/oder cyclischen monohydroxyfunktionellen Alkanolen und/oder acyclischen und/oder cyclischen monohydroxyfunktionellen Alkenolen, bevorzugt Methanol, Ethanol, iso-Propanol, n-Propanol, iso-Butanol, n-Butanol, sec-Butanol, tert-Butanol, Pentan-1-ol, Pentan-2-ol, Pentan-3-ol, 2-Methyl-butan-1-ol, 2-Methyl-butan-2-ol, 3-Methyl-butan-1-ol, 3-Methyl-butan-2-ol, 2,2-Dimethylpropan-1-ol, Hexan-l-ol, Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2-Ethyl-1-butanol,2-Methyl-3-butin-2-ol, 3-Butin-1-ol, Propagylalkohol, 1-tert-Butoxy-2-propanol, 1-Heptanol, 2-Heptanol, 3-Heptanol, 4-Heptanol, 1-Octanol, 2-Octanol, 3-Octanol, 4-Octanol, 1-Nonanol, 2-Nonanol, 3-Nonanol, 4-Nonanol, 5-Nonanol, 1-Decanol, 2-Decanol, 3-Decanol, 4-Decanol, 5-Decanol, 1-Undecanol, 2-Undecanol, 3-Undecanol, 4-Undecanol, 5-Undecanol, 6-Undecanol, 1-Dodecanol, 2-Dodecanol, 3-Dodecanol, 4-Dodecanol, 5-Dodecanol, 6-Dodecanol oder Mischungen davon.

4. Verfahren nach Anspruch 2 oder 3, **dadurch gekennzeichnet, dass** die polymere monohydroxyfunktionelle Verbindung A2) eine Hydroxylzahl von 20 bis 250 mg KOH/g aufweist, vorzugsweise 20 bis 112 mg KOH/g und besonders bevorzugt 20 bis 50 mg KOH/g, gemessen nach DIN 53240-3:2016-03 und/ oder, dass der Stoffmengenanteil der OH-Gruppen der Summe der Komponenten A1) und A2) 25,0 bis 90,0 mol-%, bevorzugt 35,0 bis 85,0 mol-%, besonders bevorzugt 40,0 bis 80,0 mol-% beträgt, bezogen auf die Gesamtstoffmenge der OH-Gruppen der Komponente A).

5. Verfahren nach einem der Ansprüche 2 bis 4, **dadurch gekennzeichnet, dass** das Äquivalentverhältnis der OH-Gruppen der Summe der Komponenten A1) und A2) zu den NCO-Gruppen der Komponenten B) 0,15 bis 0,65, bevorzugt 0,20 bis 0,55 und besonders bevorzugt 0,25 bis 0,50 beträgt.

6. Verfahren nach einem der vorstehenden Ansprüche, **dadurch gekennzeichnet, dass** das Polyol der Komponente A) ausgewählt ist aus der Gruppe, umfassend oder bestehend aus

A3) Polyethercarbonatpolyolen,
A4) Polyetherpolyolen, Polyesterpolyolen, Polycarbonatpolyolen

und/oder Mischungen von diesen, wobei das Polyol der Komponente A) bevorzugt wenigstens ein Polyethercarbonatpolyol A3) umfasst oder daraus besteht.

7. Verfahren nach einem der vorstehenden Ansprüche, **dadurch gekennzeichnet, dass** das aliphatische oligomere Polyisocyanat der Komponente B) Isocyanat-tragende Oligomere, gebildet aus (2n+1) aliphatischen Polyisocyanaten, umfasst, wobei n eine natürliche Zahl von 1 bis 10 ist und das aliphatische oligomere Polyisocyanat der Komponente B) zu wenigstens 90,0 Gew.-% aus diesen Isocyanat-tragenden Oligomeren besteht, wobei das aliphatische oligomere Polyisocyanat der Komponente B) vorzugsweise ein Isocyanat-tragendes Trimer umfasst, wobei die Komponente B) insbesondere eine Mischung aus diesem Trimer und wenigstens einem weiteren Isocyanat-tragenden Oligomer enthält, bei dem n eine natürliche Zahl von 2 bis 10 ist und das aliphatische oligomere Polyisocyanat der Komponente B) zu wenigsten 30,0 Gew.-%, bevorzugt 30,0 bis 80,0 Gew.-% aus diesen Isocyanat-tragenden Trimeren besteht.

8. Verfahren nach einem der vorstehenden Ansprüche, **dadurch gekennzeichnet, dass** das aliphatische oligomere Polyisocyanat der Komponente B) Isocyanurat- und/oder Iminooxadiazindion-Gruppen enthält.

9. Verfahren nach einem der vorstehenden Ansprüche, **dadurch gekennzeichnet, dass** das aliphatische oligomere Polyisocyanat der Komponente B) ein Isocyanat-tragendes Trimer der Formel (VI) und/oder Formel (VII), jeweils gebildet aus 3 aliphatischen Polyisocyanaten, umfasst, wobei R unabhängig voneinander eine aliphatische C1 bis C15 Kohlenstoffkette ist.

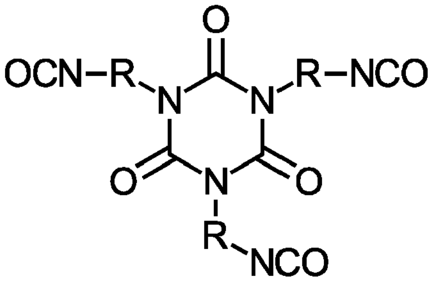
Formel (VI)

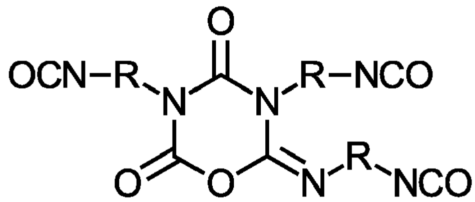
Formel (VII)

10. Verfahren nach einem der vorstehenden Ansprüche, **dadurch gekennzeichnet, dass** das aliphatische oligomere Polyisocyanat der Komponente B) aus einem Diisocyanat mit 1 bis 15 Kohlenstoffatomen hergestellt ist, wobei das Diisocyanat vorzugsweise ausgewählt ist aus 1,5-Pentamethylen-Diisocyanat und/oder 1,6-Hexamethylen-Diisocyanat.

**11.** Verfahren nach einem der vorstehenden Ansprüche, **dadurch gekennzeichnet, dass** die Komponente B) eine mittlere NCO-Funktionalität pro Molekül von ≥ 2,0, bevorzugt von 2,3 bis 4,3, besonders bevorzugt von 2,5 bis 4,2, ganz besonders bevorzugt von 2,8 bis 4,1 und am meisten bevorzugt von 3,0 bis 4,0 aufweist und /oder, dass die Zusammensetzung einen Gehalt an monomeren Diisocyanaten von < 1,0 Gew.-%, besonders bevorzugt von < 0,5 Gew.-%, ganz besonders bevorzugt von < 0,3 Gew.-% und am meisten bevorzugt von < 0,1 Gew.-%, bezogen auf das Gesamtgewicht der Zusammensetzung, aufweist, bestimmt mittels Gaschromatographie nach DIN EN ISO 10283:2007-11.

**12.** Polyurethan-Weichschaumstoff, erhalten oder erhältlich durch ein Verfahren nach einem der Ansprüche 1 bis 11.

**13.** Polyurethan-Weichschaumstoff nach Anspruch 12, **dadurch gekennzeichnet, dass** der Polyurethan-Weichschaumstoff eine Stauchhärte (im 4. Zyklus) von ≤ 14,0 kPa aufweist, bevorzugt von ≤ 12,0 kPa, besonders bevorzugt von 2,0 kPa bis 8,0 kPa und ganz besonders bevorzugt von 3,0 bis 7,0 kPa, gemessen nach DIN EN ISO 3386-1 und /oder, dass der Polyurethan-Weichschaumstoff einen Druckverformungsrest-Wert (DVR) von ≤ 3,5 % aufweist, bevorzugt von ≤ 3,0 %, weiter bevorzugt von ≤ 2,5 % und besonders bevorzugt von 0,1 % bis 2,0 %, gemessen nach DIN EN ISO 1856-2008.

**14.** Verwendung eines Polyurethan-Weichschaumstoffs nach einem der Ansprüche 12 oder 13 als oder zur Herstellung von körperstützenden Elementen, insbesondere Polstern, Matratzen, Möbeln, Automobilsitzen und Motorradsitzen.

**15.** Verwendung einer monohydroxyfunktionellen Verbindung in Kombination mit einem aliphatischen oligomeren Polyisocyanat bei einer Isocyanat-Kennzahl von wenigstens 80, insbesondere von 85 bis 115, bevorzugt von 90 bis 110 zur Erniedrigung der Stauchhärte und/oder des Druckverformungsrest-Werts von Polyurethan-Weichschaumstoffen.

Europäisches Patentamt
European Patent Office
Office européen des brevets

# EUROPÄISCHER RECHERCHENBERICHT

Nummer der Anmeldung
EP 22 15 3910

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 946 315 B2 (NIESTEN MEIKE [DE]; DÖRR SEBASTIAN [DE]; BAYER IP GMBH [DE]) 3. Februar 2015 (2015-02-03)<br>* Spalte 6, Zeile 59 *<br>* Spalte 5, Zeilen 26-36; Ansprüche 10,1,9; Beispiele 2-7; Tabelle 1; Verbindungen A2,G,B,DESMODUR N3300 *<br>----- | 1-15 | INV.<br>C08G18/28<br>C08G18/32<br>C08G18/44<br>C08G18/66<br>C08G18/79 |
| X | US 2013/131206 A1 (NIESTEN MEIKE [DE] ET AL) 23. Mai 2013 (2013-05-23)<br>* Absatz [0057]; Ansprüche 19,32; Beispiele 1-10 *<br>----- | 1-15 | |
| A | EP 3 533 815 A1 (COVESTRO DEUTSCHLAND AG [DE]) 4. September 2019 (2019-09-04)<br>* Absatz [0011]; Ansprüche 1-14 *<br>----- | 1-15 | |
| | | | RECHERCHIERTE SACHGEBIETE (IPC) |
| | | | C08G |

Der vorliegende Recherchenbericht wurde für alle Patentansprüche erstellt

4

| Recherchenort | Abschlußdatum der Recherche | Prüfer |
|---|---|---|
| München | 27. Juni 2022 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 15 3910

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-06-2022

| Im Recherchenbericht angeführtes Patentdokument | Datum der Veröffentlichung | Mitglied(er) der Patentfamilie | Datum der Veröffentlichung |
|---|---|---|---|
| US 8946315 B2 | 03-02-2015 | EP 2523988 A1 | 21-11-2012 |
| | | US 2012289622 A1 | 15-11-2012 |
| | | WO 2011083144 A1 | 14-07-2011 |
| US 2013131206 A1 | 23-05-2013 | CN 103080172 A | 01-05-2013 |
| | | EP 2585506 A1 | 01-05-2013 |
| | | JP 2013532216 A | 15-08-2013 |
| | | US 2013131206 A1 | 23-05-2013 |
| | | WO 2011161033 A1 | 29-12-2011 |
| EP 3533815 A1 | 04-09-2019 | CN 111868129 A | 30-10-2020 |
| | | EP 3533815 A1 | 04-09-2019 |
| | | EP 3759150 A1 | 06-01-2021 |
| | | US 2020392281 A1 | 17-12-2020 |
| | | WO 2019166365 A1 | 06-09-2019 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2447067 A1
- US 20060160977 A1
- EP 0006150 B1
- EP 3296336 A1
- WO 02074826 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 1359177 A
- EP 0176013 A
- EP 0000389 A
- WO 2014064130 A
- WO 2014064130 A1


### In der Beschreibung aufgeführte Nicht-Patentliteratur


- **G. OERTEL.** Polyurethane Handbook. 1993, 194, , 219
- **G. OERTEL.** Kunststoff-Handbuch. Carl-Hanser-Verlag, 1993, vol. VII, 104-127